# EUROPÄISCHE PATENTSCHRIFT

(11) **EP 1 282 772 B1**
(45) Veröffentlichungstag und Bekanntmachung des Hinweises auf die Patenterteilung: **12.04.2006**
(21) Anmeldenummer: 01933454.9
(22) Anmeldetag: 17.05.2001
(51) Int. Cl.: F02N 11/04, F02N 15/04

(54) **REDUKTIONSGETRIEBE FÜR EINEN STARTER-GENERATOR EINER VERBRENNUNGSKRAFTMASCHINE**
REDUCTION GEAR FOR A STARTER-GENERATOR OF AN INTERNAL COMBUSTION ENGINE
ENGRENAGE REDUCTEUR POUR LE DEMARREUR-GENERATEUR D'UN MOTEUR A COMBUSTION INTERNE

(30) Priorität: 17.05.2000 AT 3612000
(43) Veröffentlichungstag der Anmeldung: 12.02.2003
(73) Patentinhaber: Tesma Motoren- und Getriebetechnik Ges.m.b.H., 8160 Preding-Krottendorf (AT)
(72) Erfinder: EIBLER, Gerhard, A-8081 Heiligenkreuz (AT)
(74) Vertreter: Kovac, Werner
(86) Internationale Anmeldenummer: PCT/AT2001/000153
(87) Internationale Veröffentlichungsnummer: WO 2001/088369

(56) Entgegenhaltungen:
- EP-A- 0 384 808
- EP-A- 0 391 386
- WO-A-99/23398

## Beschreibung

Die Erfindung handelt von einem Reduktionsgetriebe für den Starter*-Generator einer Vebrennungskraftmaschine, der über einen Riementrieb mit deren Kurbelwelle triebverbunden ist und wobei das Reduktionsgetriebe ein im Kraftfluss zwischen der Kurbelwelle und einer mit dieser koachsialen ersten Riemenscheibe angeordnetes Planetengetriebe ist.

Das Bestreben nach Senkung von Kosten und Gewicht von Kraftfahrzeugen und deren Motoren erstreckt sich auf die Nebenaggregate. Besonders, wenn es um zwei schwere und teure elektrische Maschinen geht, die nie gleichzeitig arbeiten. Bei Kleinwagen (PUCH 500) wurde bereits vor Jahrzehnten ein über Riementrieb mit der Kurbelwelle verbundener Starter-Generator eingesetzt. Bei größeren, hochkomprimierten Motoren wird zum Starten ein hohes Drehmoment mit niederer Drehzahl benötigt, für den Generatorbetrieb aber eine hohe Drehzahl. Deshalb wird zwischen Kurbelwelle und Starter-Generator ein Stufengetriebe benötigt.

Aus dem Bericht von der Fachtagung "E-Maschine im Antriebsstrang" vom 04-09-1999, ausgerichtet von den Technischen Universitäten Chemnitz und Graz, ist es bekannt, dazu ein zweistufiges Planetengetriebe einzusetzen, das entweder koachsial mit der Kurbelwelle, vorzugsweise in der Riemenscheibe, oder koachsial mit dem Starter-Generator angeordnet ist. Dabei soll die Umschaltung in Abhängigkeit von der Momentenflussrichtung selbsttätig durch Schrägverzahnung des Planetengetriebes erfolgen. Abgesehen von der Schaltträgheit sind damit jedoch nicht alle möglichen Betriebszustände des Motors und deren Übergänge beherrschbar. Man denke an schnelles Hochdrehen des Motors nach erfolgreichem Starten, an schnelles Gaswegnehmen aus hoher Motordrehzahl, oder an Zurückschlagen bei nicht zeitgemäßem Zünden. Zudem ist es wünschenswert, in bestimmten Betriebszuständen die Verbindung über das Reduktionsgetriebe unterbrechen zu können.

Aus der Patentschrift US 5,132,604 ist ebenfalls die Anordnung eines Planetengetriebes als Reduktionsgetriebe für einen Starter-Generator an der Kurbelwellenachse bekannt. Dort wird bereits ein Freilauf zwischen Planetenträger und Ausgangswelle eingesetzt, über den somit die gesamte Leistung übertragen wird. Das erfordert sehr groß dimensionierte Freiläufe, die entsprechend träge schalten. Planetengetriebe ihrerseits sind problematisch, weil mit ihnen geometrisch bedingt die erwünschte Übersetzung von optimal zwischen 0,5 und 0,2 ins Langsame bei gleichen Drehrichtungen in beiden Gängen nicht erreichbar ist. Ausserdem sind Kosten, Gewicht und Raumbedarf von Planetengetrieben noch erheblich. Letzterer führt zu sehr großen Riemenscheiben, wenn das Planetengetriebe von einer eingehüllt sein soll.

Aus der WO-OS 99/23398 ist ein vielstufiges Schaltgetriebe mit mehreren in Reihe angeordneten Planetensätzen mit einem "koplanaren" Planetenrad bekannt. Das Schalten der Gänge erfolgt dort mittels hydraulisch betätigter Reibungkupplungen, oder Bandbremsen und Überholkupplungen.

Es ist Ziel der Erfindung, Reduktionsgetriebe der eingangs umrissenen Art so zu gestalten, dass sie bei reduzierten Kosten und Abmessungen die gewünschte Übersetzung erreicht und so schaltbar ist, dass sie in allen denkbaren Betriebszuständen bestehen. Erfindungsgemäß wird das durch folgende konstruktive Merkmale erreicht:
a) Das Planetengetriebe ein Gehäuse und eine aus einem Hohlrad, einem Sonnenrad, einem Käfig und einem Planetenring mit Innenverzahnung und Aussenverzahnung bestehende Planetenstufe aufweist,
b) das Hohlrad mit der Aussenverzahnung des Planetenringes kämmt und mit der Kurbelwelle antriehrverbunden ist,
c) das Sonnenrad mit der Innenverzahnung des Planetenringes kämmt und mittels einer ersten Kupplung mit dem Gehäuse drehfest verbindbar ist, entsprechend der Starterstellung,
d) der Käfig exzentrische Lager für den Planetenring besitzt, mit der ersten Riemenscheibe drehfest verbunden ist, und mittels einer zweiten Kupplung mit einem der Glieder des Planetengetriebes drehfest verbindbar ist, sodaß Blockumlauf des Planetengetriebes eintritt, entsprechend der Generatorstellung.

Planetengetriebe gemäß Merkmal a) sind billiger und leichter als übliche Planetengetriebe und brauchen weniger Einbauraum. In besonders hohem Maße trifft das für den für die gegenständliche Anwendung geforderten Stufensprung zwischen direktem und übersetzem Gang bei gleicher Drehrichtung zu. Das erlaubt ihren Einbau innerhalb der Riemenscheibe. In Getrieben für den Radantrieb von Kraftfahrzeugen sind die Stufensprünge wesentlich kleiner.

Diese Vorteile werden noch verstärkt durch die Anbindung der Glieder dieses Planetengetriebes gemäß b) und c). Die Antriebsverbindung von Hohlrad und Kurbelwelle ergibt trotz des zum Starten erforderlichen hohen Drehmomentes am großen Radius des Hohlrades nur kleine Zahnkräfte. Das Sonnenrad dient nur als Reaktionsglied, es liegt günstig für die Anbindung der Kupplung. Durch Verkuppeln mit dem feststehenden Gehäuse wird die Übersetzung zum Starten geschaffen; bei Generatorbetrieb ist es unbelastet.

Die Vereingung von Käfig und Riemenscheibe gemäß d) erlaubt die saubere Aufnahme der durch die Riemenspannung hervorgerufenen Lagerkräfte. Auch ist die zweite Kupplung zwischen dem Käfig und einem anderen Glied des Plantengetriebs gut anbindbar. Damit wird im Generatorbetrieb Blockumlauf des gesamten Getriebes erreicht, bei dem die Verluste am geringsten sind. Für die Kupplungen sind im Prinzip zunächst alle bekannten Bauarten denkbar: reibschlüssige Scheibenkupplungen, formschlüssige Kupplungen mit Klauen oder Zähnen, Band- oder Schlingfederkupplungen, elektromagnetische Kupplungen, Freiläufe mit Roll-oder Klemmkörpern, gegebenenfalls alternativ oder zusätzlich Fliehkraftkupplungen.

In einer bevorzugten und besonders einfachen Bauweise ist das Hohlrad mit der Kurbelwelle drehfest verbunden und ist der Käfig mittels einer zweiten Kupplung mit dem Hohlrad drehfest verbindbar (Anspruch 2).
Das ist der häufigste Fall mit einer einzigen Übersetzungsstufe zum Starten des Motors.

In einer ersten Ausführungsform sind die erste und die zweite Kupplung Freilaufkupplungen, von denen die erste Kupplung schließt, wenn der Käfig angetrieben ist, und von denen die zweite Kupplung schließt, wenn der Käfig treibt (Anspruch 3). Erste und die zweite Kupplung sind somit gegenläufig eingebaut. Man erhält so direkten Durchtrieb bei Generatorbetrieb und eine optimale Übersetzung zum Starten. Sobald der Motor beim Starten hochzulaufen beginnt, erfolgt der Übergang in dem Generator schnell, automatisch und trotzdem weich.

In einer Weiterbildung sind die beiden Kupplungen fremdgesteuerte Kupplungen, von denen die erste beim Starten der Verbrennungskraftmaschine und die zweite beim normalen Dynamobetrieb geschlossen ist (Anspruch 4). Wobei zunächst wieder alle oben genannten Kupplungen in Frage kommen, eingeschlossen fremdgesteuerte Freiläufe, die durch Ansteuerung in die geöffnete Stellung bringbar sind, in der sie auch bei Umkehr der Momentenrichtung bleiben (Anspruch 5). Dadurch kann auch bei plötzlicher Verzögerung des Motors oder bei Fehlzündungen kein Schließen des Freilaufes passieren. Ausserdem können so weitere vom Riementrieb angetriebene Nebenaggregate auch bei stehender Verbrennungskraftmaschine in Betrieb gehalten werden.

Die Fremdsteuerung kann auf die verschiedenste Weise erfolgen, vorzugsweise jedoch werden die beiden Kupplungen von elektrischen Stellgliedern betätigt, die von einer Steuerung in Abhängigkeit von Betriebszuständen angesteuert werden (Anspruch 6). Damit ist auch bei extremen und abnormalen Betriebszuständen eine hohe Sicherheit gegeben.

Die erfindungsgemäße Getriebekonstellation gibt auch die Möglichkeit, dass die Steuerung bei abgestellter Vebrennungskraftmaschine und bestimmten Temperaturzuständen beide Kupplungen öffnet und den Starter-Generator als Motor laufen lässt (Anspruch 7). Oft nämlich bedient der Riementrieb auch andere Nebenaggregate, wie etwa eine Kühlwasserpumpe, einen Kühlerventilator oder den Kompressor einer Klimaanlage. Die Neutralstellung des Getriebes gibt die Möglichkeit, alle diese Nebenaggregate bei stillstehendem Motor vom Starter-Generator aus anzutreiben. Die Temperaturbedingung kann beispielsweise die Kühlwassertemperatur oder die Umgebungstemperatur sein.

In Weiterbildung der Erfindung weist das Reduktionsgetriebe eine weitere aus einem weiteren Hohlrad, einem weiteren Sonnenrad, einem weiteren Käfig und einem weiteren Planetenring mit Innenverzahnung und Aussenverzahnung bestehende nachschaltbare weitere Planetenstufe auf, über die das Hohlrad mit der Kurbelwelle verbindbar ist (Anspruch 8). Die weitere Planetenstufe ermöglicht eine weitere Übersetzung, somit beispielsweise zwei verschiedene Übersetzungen zum Starten: eine für starten bei warmem Motor, eine für Kaltstart im Winter. Gemäß Anspruch 9 besteht diese Weiterbildung vorzugsweise darin, dass
a) Das weitere Hohlrad mit der Aussenverzahnung des weiteren Planetenringes kämmt, mit der Kurbelwelle antriebsverbunden ist und mittels einer dritten Kupplung mit dem Hohlrad verbindbar ist.
b) Das weitere Sonnenrad mit der Innenverzahnung des weiteren Planetenringes kämmt und gemeinsam mit dem Sonnenrad mittels der ersten Kupplung mit dem Gehäuse drehfest verbindbar ist.
c) Der weitere Käfig exzentrische Lager für den weiteren Planetenring besitzt, mittels der dritten Kupplung mit dem Hohlrad drehfest verbindbar (Kaltstart) ist, und bei Blockumlauf mittels der zweiten Kupplung mit einem der Glieder des Planetengetriebes drehfest verbunden (Generator) ist (Anspruch 8).

Bei Verbindung des weiteren Hohlrades mit dem Hohlrad (der ersten Planetenstufe) gemäß a) ist die zweite Planetenstufe umgangen, sie läuft leer als Block um. Das ist die Stellung für normalen Start bzw. Warmstart des Motors. Die beiden gemeinsam mit der ersten Kupplung verbundenen Sonnenräder (b) vereinfachen Herstellung und Bedienung; Startstellung bedeutet in beiden Startübersetzungen, dass die erste Kupplung geschlossen ist. Stellt die dritte Kupplung gemäß c) die Verbindung zwischen dem weiteren Käfig und dem Hohlrad (der ersten Planetenstufe) her, so ist das Reduktionsgetriebe in der Stellung für Kaltstart des Motors, also mit besonders hoher Übersetzung.

Diese dritte Kupplung ist eine Kupplung mit zwei Schaltstellungen, die von der Steuerung in Abhängigkeit von einer Temperatur gesteuert wird (Anspruch 10). Dadurch wird automatisch bei Kaltstart zunächst auf die größere Übersetzung geschaltet, wodurch das Losbrechen des Motors erleichtert wird, ohne die Stromversorgung eines Startermotors zu gefährden.

Im folgenden wird die Erfindung anhand von Abbildungen beschrieben und erläutert. Es stellen dar:
- Fig. 1:: Schema einer Anordnung des erfindungsgemäßen Reduktionsgetriebes,
- Fig. 2:: Schema eines erfindungsgemäßen Redulctionsgetriebes,
- Fig. 3:: Schema einer zweistufigen Weiterbildung des erfindungsgemäßen Reduktionsgetriebes,
- Fig. 4:: Längsschnitt durch eine erste Ausführungsform des erfindungsgemäßen Reduktionsgetriebes,
- Fig. 5:: Längsschnitt durch eine zweite Ausführungsform des erfindungsgemäßen Reduktionsgetriebes.

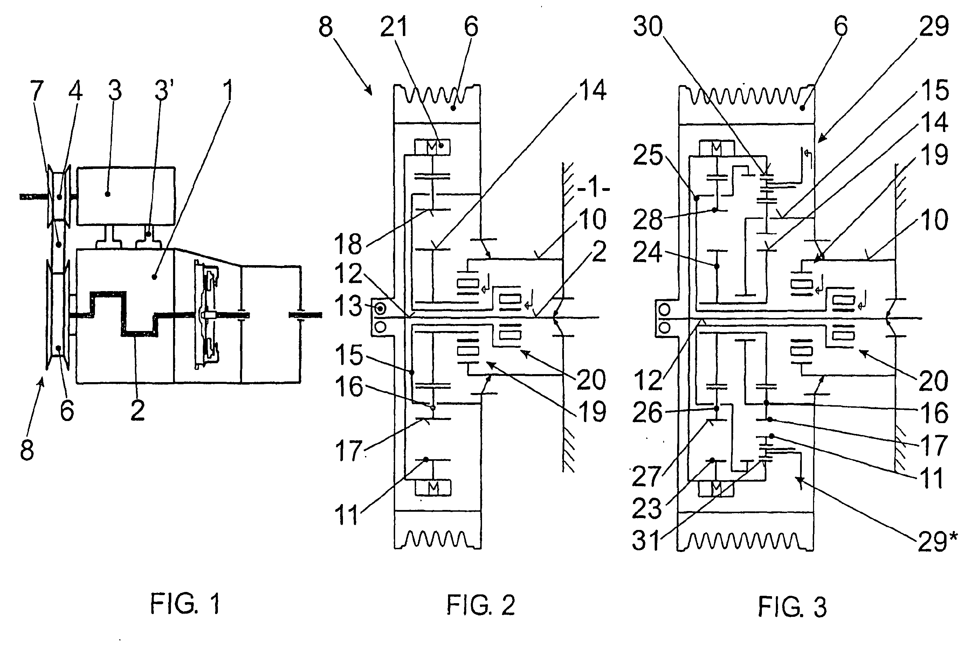

In Fig.1 ist der Motorblock mit 1, seine nur angedeutete Kurbelwelle mit 2 bezeichnet, die wie üblich daran anschließende Fahrkupplung und das Schaltgetriebe gar nicht mehr. Über dem Motorblock 1 ist ein Starter-Generator 3 an Füssen 3' befestigt. Seine Riemenscheibe 4 ist über einen Riemen (zB einen oder mehrere Keilriemen) mit einer mit der Kurbelwelle 2 koaxialen Riemenscheibe 6 verbunden. Über den Riementrieb 5,6,7 soll sowohl der Starter-Generator als Generator angetrieben werden, als auch der Verbrennungsmotor von dem Starter-Generator 3 gestartet werden. Um das dafür nötige höhere Drehmoment bei kleinerer Drehzahl an der Kurbelwelle 2 zu erreichen, ist ein Reduktionsgetriebe 8 vorgesehen. Es ist konzentrisch mit der Kurbelwelle 2 großteils innerhalb der Riemenscheibe 6 untergebracht.

In Fig.2 ist das Reduktionsgetriebe 8 schematisch dargestellt. Dessen feststehendens Gehäuse bzw. Gehäuseteil 10 ist am Motorblock 1 befestigt, beispielsweise angeschraubt. Zum anderen Teil wird das Reduktionsgetriebe 8 von der Riemenscheibe 6 umgeben. Das Reduktionsgetriebe 8 selbst wird von einer besonders aufgebauten Planetenstufe gebildet, die besteht aus: Einem Hohlrad 11, mit einer der Kurbelwelle 2 koaxialen und in Lagern 13 unterstützten Hohlradwelle 12, einem Sonnenrad 14, einem mit der Riemenscheibe 6 fest verbundenen nur angedeuteten Käfig 15 und einem Planetenring 16. Dieser weist eine Außenverzahnung 17 und eine Innenverzahnung 18 auf und umgibt das Sonnenrad 14. Der Innendurchmesser des Planetenringes 16 ist größer als der Außendurchmesser des Sonnenrades 14, der Außendurchmesser des Planetenringes 16 kleiner als der Innendurchmesser des Hohlrades 11. So kämmt der Plantenring 16 mit seiner Außenverzahnung 17 mit dem Hohlrad 11, und, gegenüberliegend, mit seiner Innenverzahnung 18 mit dem Sonnenrad 14.

Das Sonnenrad 14 ist durch eine erste Kupplung 19 mit dem Gehäuse 10 verbindbar, der Käfig 15 über eine zweite Kupplung 20 mit dem Hohlrad 11 bzw. der Hohlradwelle 12. Für die Kupplungen sind im Prinzip alle bekann-ten Bauarten denkbar: Reibschlüssige Scheibenkupplungen, formschlüssige Kupplungen mit Klauen oder Zähnen, Band- oder Schlingfederkupplungen, elektromagnetische Kupplungen, Freiläufe mit Roll- oder Klemmkörpern, gegebenenfalls alternativ oder zusätzlich, Fliehkraftkupplungen. Bei dem dargestellten Ausführungsbeispiel sind es fremdgesteuerte Kupplungen oder Freiläufe, was jeweils durch einen kleinen Winkelpfeil angedeutet ist. Wenn die Kupplung 20 bei Drehmomentfluß von der Kurbelwelle 2 zur Riemenscheibe 6, also bei Generatorbetrieb, geschlossen ist, läuft die Planetenstufe als Block um, die Riemenscheibe 6 rotiert mit der Drehzahl der Kurbelwelle 2. Wenn die Kupplung 20 geöffnet und die Kupplung 19 geschlossen ist, bei Drehmomentfluß von der Riemenscheibe 6 zur Kurbelwelle 2, ist das Sonnenrad 14 drehfest mit dem Gehäuse 10 verbunden. Der Käfig 15 ist treibendes Glied der Planetenstufe, das Hohlrad 11 getriebenes Glied, es treibt über die Hohlradwelle 12 die Kurbelwelle 2 mit wesentlich kleinerer Drehzahl und höherem Drehmoment. Das ist der Startbetrieb. Schließlich ist noch ein Schwingungstilger 21 angedeutet.

In Fig.3 ist eine zweistufige Weiterbildung des Reduktionsgetriebes der Fig.2 schematisch dargestellt. Die Teile 10 bis 20 sind gleich denen der Fig.2 und tragen daher dieselben Bezugszeichen. Zusätzlich ist eine weitere, zweite, Planetenstufe vorgesehen, die besteht aus: einem weiteren Hohlrad 23, einem weiteren Sonnenrad 24, einem weiteren Käfig 25 und einem weiteren Plantenring 26 mit Außenverzahnung 27 und Innenverzahnung 28. Zur Umschaltung zwischen einem normal übersetzten und einem stark übersetzten Gang zum Starten der Verbrcnnungskrafunaschine ist eine dritte Kupplung 29 vorgesehen. Sie ist in der oberen Bildhälfte in der Stellung mit normaler Übersetzung und in der unteren Bildhälfte als 29* in der Stellung gezeigt, in der, etwa für Kaltstart, die Übersetzung besonders groß ist. In der ersteren Stellung 29 verbindet sie das Hohlrad 11 mit einem ersten Kuppelring 30, der drehfest mit dem weiteren Hohlrad 23 und mit der Hohlradwelle 12 verbunden ist. In der Stellung 29* verbindet sie das Hohlrad 11 mit einem zweiten Kuppelring 31, der Teil des weiteren Käfigs 25 oder mit diesem fest verbunden ist. Der weitere Käfig 25 treibt dann über die geschlossene Kupplung 20 die Kurbelwelle 2 der Verbrennungskraftmaschine.

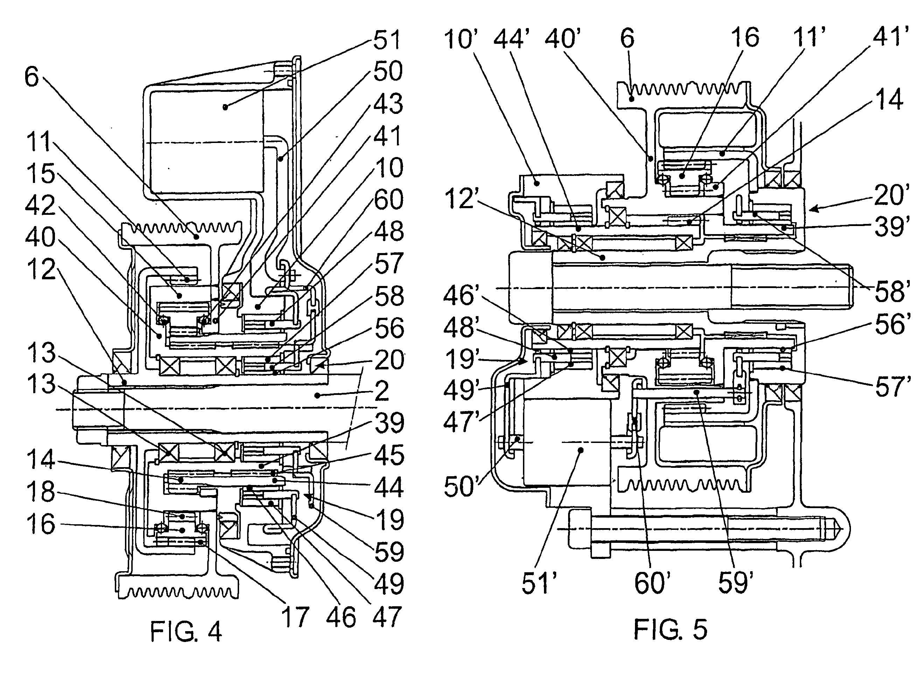

In der konkreten Ausführung nach Fig.4 sind die aus Fig.2 bekannten Teile wieder mit deren Bezugszeichen versehen. In der Praxis besteht der Käfig 15 aus einer linken Käfigwand 40 und einer rechten Käfigwand 41, in denen jeweils exzentrisch ein linkes und ein rechtes Kugellager 42, 43 vorgesehen sind, die den Planetenring 16 in der Art einer Zapfenerweiterung drehbar führen. So dreht sich der Planentenring 16 um eine exzentrische Achse. Der Käfig besitzt weiters eine Hohlwelle 39, mittels der er über die Lager 13 auf der Hohlradwelle 12 gelagert ist. Das Sonnenrad 14 besitzt einen Kragen 44 der über Nadellager 45 auf der Hohlwelle 39 des Käfigs 15 drehbar gelagert ist.

Die erste Kupplung 19 wird gebildet von einer inneren Kuppelbahn 46 auf dem Kragen 44 des Sonnenrades und von einer äußeren Kuppelbahn 47 im Gehäuse 10. Zwischen denen sind erste Kuppelelemente 48 angeordnet. Im Falle eines gewöhnlichen Klemmrollenfreilaufes sind es Roll- oder Klemm-körper, im Falle einer von aussen steuerbaren Kupplung ist es ein gegebenenfalls Roll- oder Klemmkörper enthaltender Kuppelring, der je nach Bauweise der Kupplung axial verschiebbar oder verdrehbar ist, um die Kupplung zwischen einer geöffneten Stellung, einer Freilaufstellung und einer geschlossenen Freilaufstellung zu schalten. Dazu ist ein erstes Übertragungsglied 49 vorgesehen, das über einen Umschalthebel 50 von einem elektrischen Stellglied 51 - hier ein gehäusefestes Solenoidangesteuert ist.

Die zweite Kupplung 20 wird ebenfalls von einer inneren Kuppelbahn 56 und einer äußeren Kuppelbahn 57 gebildet. Erstere ist Teil der Hohlradwelle 12 oder mit dieser fest verbunden, zweitere ist auf der Innenseite der Hohlwelle 39 des Käfigs 15 vorgesehen. Zwischen beiden sind wieder Kuppelkörper 58 vorgesehen, Klemm- oder Rollkörper bei ungesteuertem Freilauf, sonst ein verschiebbarer oder verdrehbarer zweiter Kuppelring, an dem ein zweites Übertragungsglied 59 angreift, wie bei der ersten Kupplung 19. Da hier beide Kuppelbahnen 56, 57 auf drehbaren Teilen sind, erfolgt die Bewegungsübertragung von einem weiteren vom Aktuator 51 verdeckten und daher in Fig. 4 unsichtbaren Aktuator über eine Schaltgabel 60.

Die Variante der Fig.5 unterscheidet sich von der eben beschriebenen Ausführung allgemein dadurch, dass die Aktuatoren 51 hier auf der dem Motor 1 abgewandten Seite des Reduktionsgetriebes angeordnet ist. Die Bezugszeichen der entsprechend abgewandelten Teile sind apostrophiert.

## Patentansprüche

1. Reduktionsgetriebe für den Starter-Generator einer Verbrennungskraftmaschine, der über einen Riementrieb mit deren Kurbelwelle triebverbunden ist und wobei das Reduktionsgetriebe ein im Kraftfluss zwischen der Kurbelwelle und einer mit dieser koachsialen ersten Riemenscheibe angeordnetes Planetengetriebe ist, **dadurch gekennzeichnet, dass**
a) das Reduktionsgetriebe (8) ein Gehäuse (10) und eine aus einem Hohlrad (11), einem Sonnenrad (14), einem Käfig (15) und einem Planetenring (16) mit Innenverzahnung (18) und Aussenverzahnung (17) bestehende Planetenstufe aufweist,
b) das Hohlrad (11) mit der Aussenverzahnung (17) des Planetenringes (16) kämmt und mit der Kurbelwelle (2) der Verbrennungskraftmaschine antriebsverbunden ist,
c) das Sonnenrad (14) mit der.Innenverzahnung (18) des Planetenringes (16) kämmt und mittels einer ersten Kupplung (19) mit dem Gehäuse (10) drehfest verbindbar ist,
d) der Käfig (15) exzentrische Lager (42,43) für den Planetenring (16) besitzt, mit der ersten Riemenscheibe (7) drehfest verbunden ist, und mittels einer zweiten Kupplung (20) mit einem der Glieder (11) der Planetenstufe drehfest verbindbar ist, sodaß Bloclcumlauf der Planetenstufe eintritt.

2. Reduktionsgetriebe nach Anspruch 1, **dadurch gekennzeichnet, dass** das Hohlrad (11) mit der Kurbelwelle (2) drehfest verbunden ist und dass der Käfig (15) mittels der zweiten Kupplung (20) mit dem Hohlrad (11) drehfest verbindbar ist.

3. Reduktionsgetriebe nach Anspruch 1, **dadurch gekennzeichnet, dass** die erste (19) und die zweite (20) Kupplung (19,20) Freilaufkupplungen sind, von denen die erste Kupplung (19) schließt, wenn der Käfig (15) angetrieben ist, und von denen die zweite Kupplung (20) schließt, wenn der Käfig (15) treibt.

4. Reduktionsgetriebe nach Anspruch 1 oder Anspruch 3, **dadurch gekennzeichnet, dass** die beiden Kupplungen (19,20) fremdgesteuerte Kupplungen sind, von denen beim normalen Generatorbetrieb die erste (19) geöffnet und die zweite (20) geschlossen ist und beim Starten der Verbrennungskraftmaschine die zweite (20) geöffnet und die erste (19) geschlossen ist.

5. Reduktionsgetriebe nach Anspruch 4, **dadurch gekennzeichnet, dass** die beiden fremdgesteuerten Kupplungen (19,20) Freiläufe sind, die von einer Steuerung in die geöffnete Stellung bringbar sind, in der sie auch bei Umkehr der Momentenrichtung bleiben.

6. Reduktionsgetriebe nach Anspruch 4, **dadurch gekennzeichnet, dass** die beiden Kupplungen (19,20) von elektrischen Stellgliedern (51) betätigt werden, die von einer Steuerung in Abhängigkeit von Betriebszuständen angesteuert sind.

7. Reduktionsgetriebe nach Anspruch 6, **dadurch gekennzeichnet, dass** die Steuerung bei abgestellter Vebrennungskraftmaschine und bestimmten Temperaturzuständen beide Kupplungen (19,20) geöffnet und den Starter-Generator (8) als Motor laufen lässt.

8. Redulctionsgetriebe nach Anspruch 1, **dadurch gekennzeichnet, dass** es eine aus einem weiteren Hohlrad (23), einem weiteren Sonnenrad (24), einem weiteren Käfig (25) und einem weiteren Planetenring (26) mit Innenverzahnung (28) und Aussenverzahnung (27) bestehende nachschaltbare weitere Planetenstufe aufweist, über die das Hohlrad (11) mit der Kurbelwelle (2) verbindbar ist.

9. Reduktionsgetriebe nach Anspruch 8, **dadurch gekennzeichnet, dass**
a) das weitere Hohlrad (23) mit der Aussenverzahnung (27) des weiteren Planetenringes (26) kämmt, mit der Kurbelwelle (2) antriebsverbunden ist und mittels einer dritten Kupplung (29) mit dem Hohlrad (11) verbindbar ist,
b) das weitere Sonnenrad (24) mit der Innenverzahnung (28) des weiteren Planetenringes (26) kämmt und gemeinsam mit dem Sonnenrad (14) mittels der ersten Kupplung (19) mit dem Gehäuse (10) drehfest verbindbar ist,
c) der weitere Käfig (25) exzentrische Lager für den weiteren Planetenring (26) besitzt, mittels der dritten Kupplung (29) mit dem Hohlrad (11) drehfest verbindbar ist, und bei Blockumlauf mittels der zweiten Kupplung (20) mit einem der Glieder (11,12,23) des Planetengetriebes drehfest verbunden ist.

10. Reduktionsgetriebe nach Anspruch 9, **dadurch gekennzeichnet, dass** die dritte Kupplung (29) eine Kupplung mit zwei Schaltstellungen ist, die von der Steuerung in Abhängigkeit von einer Temperatur gesteuert wird.

## Claims

1. A reduction gear for the starter-generator of an internal combustion engine, said starter-generator being drive-connected to its crankshaft via a belt drive and the reduction gear being a planetary gear arranged in the transmission path between the crankshaft and a first belt pulley coaxial with said crankshaft **characterized in that**
a) The reduction gear (8) has a housing (10) and a planetary gear stage comprising an internal gear (11), a sun gear (14), a cage (15) and a planetary ring (16) with internal toothing (18) and external toothing (17),
b) the internal gear (11) meshes with the external toothing (17) of the planetary ring (16) and is drive-connected to the crankshaft (2) of the internal combustion engine,
c) the sun gear (14) meshes with the internal toothing (18) of the planetary ring (16) and can be rotationally locked to the housing (10) by means of a first clutch (19),
d) the cage (15) has eccentric bearings (42, 43) for the planetary ring (16), is rotationally locked to the first belt pulley (7), and is rotationally locked by means of a second clutch (20) to one of the members (11) of the planetary gear stage, so that the planetary gear stage rotates as a whole.

2. The reduction gear as claimed in claim 1, **characterized in that** the internal gear (11) is rotationally locked to the crankshaft (2) and that the cage (15) can be rotationally locked to the internal gear (11) by means of the second clutch (20).

3. The reduction gear as claimed in claim 1, **characterized in that** the first clutch (19) and the second clutch (20) (19, 20) are overrunning clutches, the first clutch (19) closing when the cage (15) is being driven, and the second clutch (20) closing when the cage (15) is driving.

4. The reduction gear as claimed in claim 1 or claim 3, **characterized in that** the two clutches (19, 20) are remote-controlled clutches, the first clutch (19) being opened and the second clutch (20) closed in normal generator operation, and the second clutch (20) being opened and the first clutch (19) closed for starting of the internal combustion engine.

5. The reduction gear as claimed in claim 4, **characterized in that** the two remote-controlled clutches (19, 20) are overrunning clutches, which can be brought by a control into the opened position, in which.they remain even if the torque direction is reversed.

6. The reduction gear as claimed in claim 4, **characterized in that** the two clutches (19, 20) are operated by electrical actuators (51), which are activated by a control as a function of operating conditions.

7. The reduction gear as claimed in claim 6, **characterized in that** when the internal combustion engine is switched off and under certain temperature conditions, the control allows both clutches (19, 20) to run opened and the starter-generator (8) to run as motor.

8. The reduction gear as claimed in claim 1, **characterized in that** it has a further engageable planetary gear stage comprising a further internal gear (23), a further sun gear (24), a further cage (25) and a further planetary ring (26) with internal toothing (28) and external toothing (27), via which gear stage the internal gear (11) can be connected to the crankshaft (2).

9. The reduction gear as claimed in claim 8, **characterized in that**
a) The further internal gear (23) meshes with the external toothing (27) of the further planetary ring (26), is drive-connected to the crankshaft (2) and can be connected by means of a third clutch (29) to the internal gear (11),
b) The further sun gear (24) meshes with the internal toothing (28) of the further planetary ring (26) and together with the sun gear (14) can be rotationally locked to the housing (10) by means of the first clutch (19),
c) The further cage (25) has eccentric bearings for the further planetary ring (26), can be rotationally locked to the internal gear (11) by means of the third clutch (29), and when rotating as a whole can be rotationally locked by means of the second clutch (20) to one of the members (11, 12, 23) of the planetary gear train. ,

10. The reduction gear as claimed in claim 9, **characterized in that** the third clutch (29) is a clutch having two switching positions, which is controlled by the control as a function of a temperature.

## Revendications

1. Réducteur pour la génératrice de démarrage d'un moteur à combustion interne, qui est relié par voie motrice au vilebrequin de celui-ci par l'intermédiaire d'une courroie de transmission, et dans lequel le réducteur est un engrenage planétaire disposé dans le flux de force entre le vilebrequin et une première poulie coaxiale à celui-ci, **caractérisé en ce que** :
a) le réducteur (8) présente un boîtier (10) et un étage planétaire constitué d'une roue creuse (11), d'une roue solaire (14), d'une cage (15), et d'une couronne planétaire (16) présentant une denture intérieure (18) et une denture extérieure (17),
b) la roue creuse (11) s'engrène avec la denture extérieure (17) de la couronne planétaire (16) et est en liaison d'entraînement avec le vilebrequin (2) du moteur à combustion interne,
c) la roue solaire (14) s'engrène avec la denture intérieure (18) de la couronne planétaire (16) et peut être reliée rigidement en rotation au boîtier (10) par l'intermédiaire d'un premier coupleur (19),
d) la cage (15) comporte des paliers excentriques (42,43) pour la couronne planétaire (16), est reliée rigidement en rotation à la première poulie (7), et peut être reliée rigidement en rotation à l'un des éléments (11) de l'étage planétaire par l'intermédiaire d'un deuxième coupleur (20), de telle sorte qu'il se produit un mouvement en bloc de l'étage planétaire.

2. Réducteur selon la revendication 1, **caractérisé en ce que** la roue creuse (11) est reliée rigidement en rotation au vilebrequin (2), et **en ce que** la cage (15) peut être reliée rigidement en rotation à la roue creuse (11) par l'intermédiaire du deuxième coupleur (20).

3. Réducteur selon la revendication 1, **caractérisé en ce que** les premier (19) et deuxième (20) coupleurs (19,20) sont des coupleurs à roue libre, avec lesquels le premier coupleur (19) se ferme lorsque la cage (15) est menée, et le deuxième coupleur (20) se ferme lorsque la cage (15) est menante.

4. Réducteur selon la revendication 1 ou la revendication 3, **caractérisé en ce que** les deux coupleurs (19,20) sont des coupleurs commandés extérieurement, dans lesquels, lors d'un fonctionnement normal de la génératrice, le premier coupleur (19) est ouvert et le deuxième (20) est fermé, et lors de démarrage du moteur à combustion interne, le deuxième (20) est ouvert et le premier (19) est fermé.

5. Réducteur selon la revendication 4, **caractérisé en ce que** les deux coupleurs (19,20) commandés extérieurement sont des roues libres, qui peuvent passer dans la position ouverte à l'aide d'une commande, position dans laquelle ils restent également lors de l'inversion du sens des moments.

6. Réducteur selon la revendication 4, **caractérisé en ce que** les deux coupleurs (19,20) sont actionnés par des actionneurs électriques (51), qui sont pilotés par une commande en fonction d'états de fonctionnement.

7. Réducteur selon la revendication 6, **caractérisé en ce que** la commande, à l'arrêt du moteur à combustion interne et dans des états de température déterminés, ouvre les deux coupleurs (19,20) et fait fonctionner la génératrice de démarrage (8) comme un moteur.

8. Réducteur selon la revendication 1, **caractérisé en ce qu'**il présente un autre étage planétaire monté en aval, constitué d'une autre roue creuse (23), d'une autre roue solaire (24), d'une autre cage (25), et d'une autre couronne planétaire (26) présentant une denture intérieure (28) et une denture extérieure (27), permettant de relier la roue creuse (11) au vilebrequin (2).

9. Réducteur selon la revendication 8, **caractérisé en ce que** :
a) l'autre roue creuse (23) s'engrène avec la denture extérieure (27) de l'autre couronne planétaire (26), est en liaison d'entraînement avec le vilebrequin (2), et peut être reliée à la roue creuse (11) par l'intermédiaire d'un troisième coupleur (29),
b) l'autre roue solaire (24) s'engrène avec la denture intérieure (28) de l'autre couronne planétaire (26), et peut être reliée rigidement en rotation, conjointement avec la roue solaire (14), au boîtier (10) par l'intermédiaire du premier coupleur (19),
c) l'autre cage (25) comporte des paliers excentriques pour l'autre couronne planétaire (26), peut être reliée rigidement en rotation à 1a roue creuse (11) par l'intermédiaire du troisième coupleur (29) et, lors d'un mouvement en bloc, est reliée rigidement.en rotation à l'un des éléments (11,12,23) de l'engrenage planétaire par l'intermédiaire du deuxième coupleur (20).

10. Réducteur selon la revendication 9, **caractérisé en ce** le troisième coupleur (29) est un coupleur présentant deux positions de commutation, qui est piloté par la commande en fonction d'une température.
